# EUROPÄISCHE PATENTSCHRIFT

(11) **EP 0 573 067 B1**
(45) Veröffentlichungstag und Bekanntmachung des Hinweises auf die Patenterteilung: **19.03.1997**
(21) Anmeldenummer: 93109042.7
(22) Anmeldetag: 04.06.1993
(51) Int. Cl.: A22C 11/00

(54) **Vorrichtung zum Enthäuten von stangenförmigen Lebensmitteln**
Device for skinning cylindrical food products
Dispositif pour retirer la peau des produits alimentaires cylindrique

(30) Priorität: 05.06.1992 DE 9207520 U
(43) Veröffentlichungstag der Anmeldung: 08.12.1993
(73) Patentinhaber: Dixie-Union Verpackungen GmbH, D-87437 Kempten (DE)
(72) Erfinder: Funke, Peter Dipl.-Ing., D-88161 Lindenberg (DE); Fackler, Eugen, D-88471 Laupheim (DE); Diete, Günter Dipl.-Ing., W-87634 Obergünzburg (DE)
(74) Vertreter: Pfister, Helmut, Dipl.-Ing.

(56) Entgegenhaltungen:
- DE-A- 2 913 803
- DE-B- 1 291 250
- DE-C- 901 993
- GB-A- 745 966
- US-A- 2 434 316
- US-A- 4 637 095
- US-A- 4 682 387

## Beschreibung

Die Erfindung betrifft eine Vorrichtung zum Enthäuten von stangenförmigen Lebensmitteln, insbesondere Würsten gemäß den Merkmalen im Oberbegriff des Hauptanspruchs.

Aus der US-Patentschrift 4.637.095 ist eine Vorrichtung entsprechend dem Oberbegriff bekannt. Bei dieser Vorrichtung wird die Wurst von zwei Walzen angetrieben, die die Wurst zwischen sich einschließen und gegeneinander verkippt sind. Dadurch resultiert eine Überlagerung einer Längs- wie Drehbewegung. Die bekannte Vorrichtung weist zum Ablösen der Wursthaut eine Abzugsvorrichtung auf, die den Wursthautzipfel ergreift, indem die Abzugsvorrichtung in den Transportweg der Wurst geschwenkt ist. Ein Messer schneidet die Wursthaut im Bereich des Wursthautendes ein. Nachdem die Abzugsvorrichtung das Wursthautende ergriffen hat, schwenkt die Abzugsvorrichtung aus dem Transportweg und löst einen schneckenförmigen Hautstreifen von der Wurst ab, die sich längs verschieblich, sich drehend über die Abzugsvorrichtung hinwegbewegt.

Ein Nachteil dieser Ausbildung besteht darin, daß die Abzugsvorrichtung einen hohen konstruktiven Aufwand benötigt, da die Abzugsvorrichtung eine Schwenkbewegung aus dem Transportweg weg ausführen muß, wobei sichergestellt werden muß, daß die Abzugsvorrichtung auch die Wursthaut bzw. das Ende der Wursthaut ergriffen hat. Dies wird nicht ohne ein Anhalten der Transportbewegung der Wurst erfolgen können.

Des weiteren ist bei dieser Vorrichtung von Nachteil, daß die aufgelegte Wurst in einem sehr großen Bereich nicht geführt ist. Da die zu verarbeitenden Wurststangen eine Länge von über 140 cm bei einem Durchmesser von bis zu 25 cm aufweisen können, besteht die Gefahr, daß die Wurst, wenn sie nicht aufliegt, abbricht.

Aus der Praxis sind Enthäutungsvorrichtungen für kleine Frankfurter Würstchen bekannt, bei denen das Würstchen stark erhitzt und dann mit einem Messer in Längsrichtung aufgeschnitten wird. Hierdurch springt die Haut auf, löst sich von selbst ab und wird getrennt vom Würstchen wegbefördert. Diese Technik läßt sich nur in Verbindung mit kleinen Würstchen verwenden und ist für große, industriell hergestellte Stangenwürste nicht geeignet. Auch ist die vorbekannte Technik nicht für andere Lebensmittel einsetzbar. Sie erfordert einen erheblichen Bauaufwand und schafft dadurch außerdem Probleme mit der Reinigung und Hygiene der Schälvorrichtung.

Die vorliegende Erfindung hat es sich zur Aufgabe gemacht, eine Vorrichtung zum Enthäuten von Lebensmitteln vorzusehen, mit der es möglich ist, Lebensmittel, insbesondere industriell gefertigte Stangenwürste und dergleichen, schonend und zuverlässig zu enthäuten.

Die Erfindung löst diese Aufgabe mit den Merkmalen im Hauptanspruch.
Die erfindungsgemäße schälmaschine zeichnet sich durch einen relativ einfachen und unkomplizierten Aufbau aus. Sie besitzt eine hohe Betriebssicherheit und ist zum Enthäuten unterschiedlicher Arten von Lebensmitteln mit unterschiedlichen Größen geeignet. Die Einzelteile der Schälmaschine sind für Reinigungszwecke leicht zugänglich und lassen sich auch einfach entfernen. Die erfindungsgemäße Schälmaschine genügt damit auch strengen Hygienevorschriften.

Die Schälmaschine arbeitet mit einem besonderen Schälverfahren. Hierzu braucht die Haut des Lebensmittels nur am Vorderende kurz angeschnitten zu werden, so daß ein Hautzipfel oder relativ kleiner Hautstreifen entsteht. Dieser wird dann in die seitliche Abzugsvorrichtung eingelegt, die den Hautstreifen vom Lebensmittel abzieht und spiralförmig abwickelt. Das Lebensmittel dreht sich dabei um die eigene Längsachse und wird gleichzeitig entsprechend des Spiralabzuges axial gefördert.

Die Schälmaschine besteht aus einer Aufgabestation, einer Schälstation und einer Auswurfstation, die hintereinander angeordnet und über eine durchgehende Aufnahme für das Lebensmittel verbunden sind. Während des Abwickelvorganges wandert das Lebensmittel auf der Aufnahme durch die Stationen. Der Schälvorgang kann dadurch im Durchlaufverfahren stattfinden, was eine hohe Kapazität und Auslastung der Schälmaschine ermöglicht.

Die Schälmaschine kann in eine Fertigungslinie integriert sein, wobei das Lebensmittel im Durchlauf in mehreren Schritten bearbeitet wird. Die Auswurfstation kann dabei eine Übergabefunktion haben und die Verbindung zur nächsten Bearbeitungsstufe herstellen. Die abgeschälte Produktstange, z.B. eine Wurst, kann aus dem Abschälraum durch eine Wandschleuse in einen benachbarten Verarbeitungsraum, z.B. einen Aufschnittraum (Reinraum) gelangen.

Das Lebensmittel ist auf der Aufnahme drehbar und längsverschieblich gelagert und angetrieben. Die Abzugsvorrichtung kann dadurch relativ ortsfest angeordnet sein. Die Abzugsvorrichtung läßt sich in konstruktiver Hinsicht unterschiedlich ausbilden, beispielsweise als Wickelvorrichtung oder dergleichen. In der bevorzugten Ausführungsform weist sie zwei angetriebene parallele Abzugswalzen auf, die den Hautstreifen zwischen sich im Klemmschluß fördern. Diese Konstruktion ist besonders betriebssicher, wenig bauaufwendig, einfach zu handhaben sowie leicht zu warten und zu reinigen. Nach Beendigung des Abwickelvorganges ist die Abzugsvorrichtung sofort wieder frei und kann auf einfache und schnelle Weise für das nächste Lebensmittel wieder neu beschickt werden. Sie läßt sich außerdem an unterschiedliche Arten und Größen der Lebensmittel einfach und beliebig anpassen. Um eine optimal und gleichmäßig spiralförmige Abwicklung des Hautstreifens zu erhalten, empfiehlt sich eine gemeinsame Maschinensteuerung für die Antriebe der verschiedenen auf das Lebensmittel einwirkenden Vorrichtungsteile. Die gemeinsame Steuerung kontrolliert und sichert die kinematischen Bedingungen. Zur Anpassung an verschiedene Arten und Größen von Lebensmitteln genügt eine Umprogrammierung der Maschinensteuerung.

Zur Verbesserung der Hautablösung kann an der Ablösestelle eine Trennvorrichtung aus einem hygienisch geeigneten Werkstoff angeordnet sein, die den Hautstreifen kontinuierlich freischneidet und ein Abreißen verhindert. Vorzugsweise greift die Trennvorrichtung mit einem dornartigen Leitelement unter die Haut und hebt sie vom Lebensmittel ab, bevor sie über ein Messer läuft.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigen
- Fig. 1: eine Schälmaschine in Seitenansicht,
- Fig. 2: eine Draufsicht auf die Schälmaschine entsprechend Pfeil II von Fig. 1,
- Fig. 3: eine vergrößerte Draufsicht auf die Abzugsvorrichtung in Betriebsstellung,
- Fig. 4: eine Seitenansicht der Abzugsvorrichtung gemäß Pfeil IV von Fig. 3,
- Fig. 5: eine Stirnansicht der Abzugsvorrichtung gemäß Pfeil V von Fig. 3 und
- Fig. 6 und 7: eine Trennvorrichtung zum Ablösen und Freischneiden des Hautstreifens in Stirn- und Seitenansicht

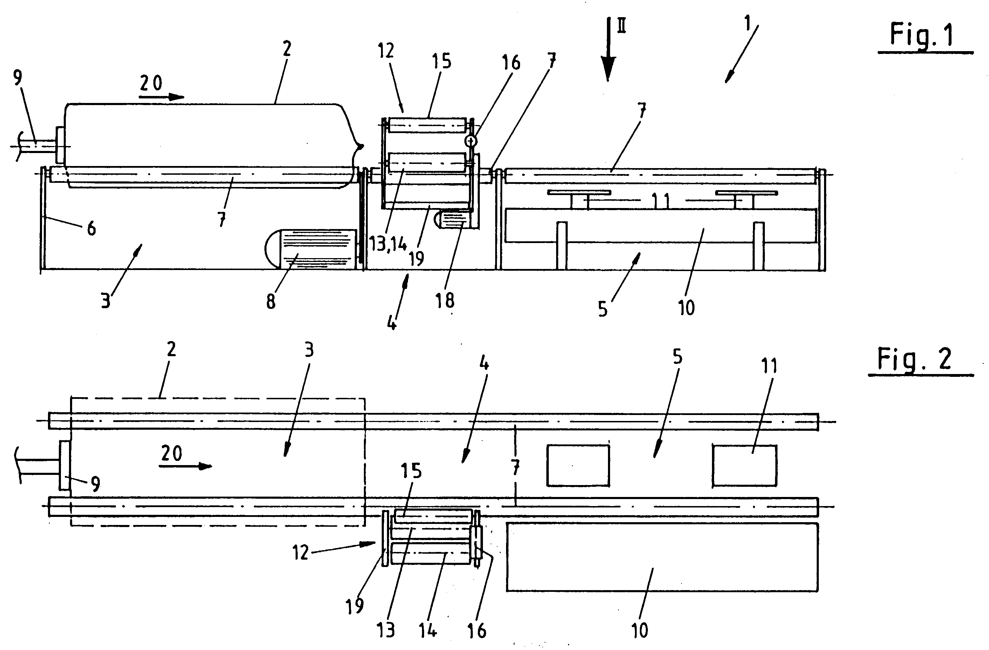

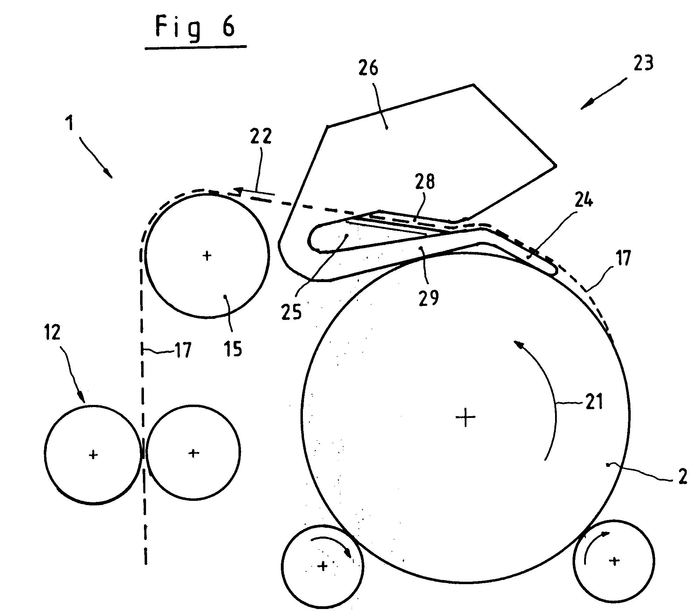

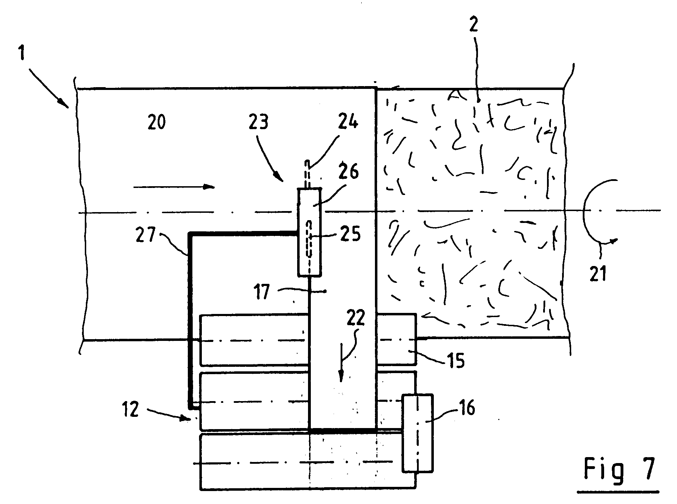

Die in den Fig. 6 und 7 dargestellte Ausführungsform entspricht dem Gegenstand des Patentanspruches 1. Die in den Fig. 1 - 5 gezeigten Ausführungsbeispiele entsprechen dem Stande der Technik und beziehen sich somit wie auch die entsprechenden Figurenbeschreibungen nicht auf eine Ausführungsform, die durch den Anspruch 1 abgedeckt ist.

Fig. 1 und 2 zeigen eine Schälmaschine (1) für stangenförmige Lebensmittel (2), insbesondere zylindrische Wurststangen im Überblick. Die gezeigte Wurst (2) hat beispielsweise eine Länge von bis zu 140 cm bei einem Durchmesser bis zu 25 cm. Die nachfolgenden Erläuterungen beziehen sich auf eine Wurst (2), gelten aber auch für andere Arten von Lebensmitteln, z.B. Käse.

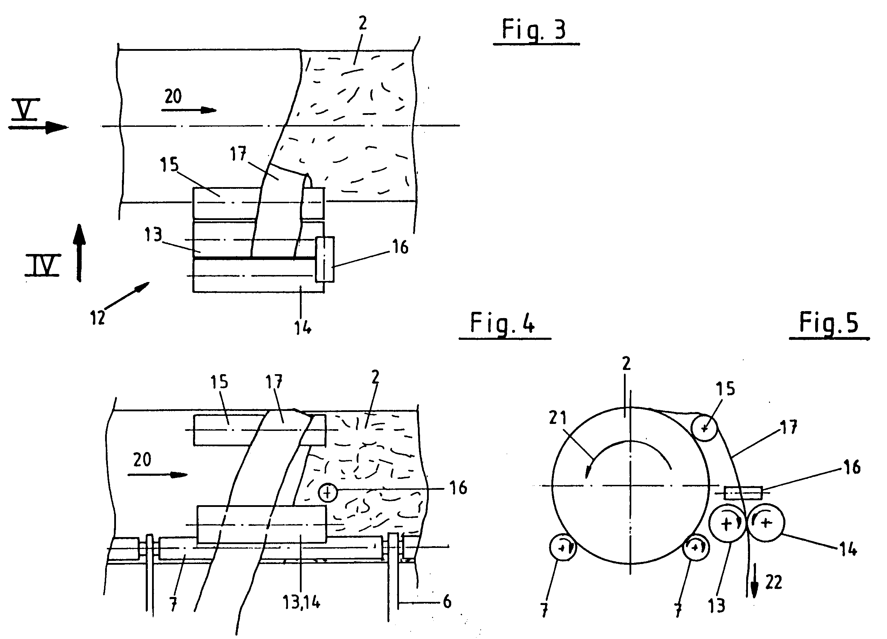

Mit der Schälmaschine (1) wird von der Wurst (2) die Haut in einem Hautstreifen (17) (vgl. Fig. 3-5) spiralförmig abgezogen und abgewickelt.

Die Schälmaschine (1) besteht aus einer Aufgabestation (3), der eine Schälstation (4) und eine Auswurfstation (5) nachgeordnet sind. Die Stationen (3,4,5) sind durch eine Aufnahme (7) für die Wurst (2) miteinander verbunden. Im gezeigten Ausführungsbeispiel besteht die Aufnahme (7) aus zwei parallelen Strängen von Stützrollen, auf denen die Wurst (2) ruht und durch die Stationen (3,4,5) wandern kann. Es können auch mehr als zwei Rollenstränge sein. Alternativ kann die Aufnahme (7) auch aus einer Wanne oder dergleichen anderer geeigneter formschlüssiger Lagerung für die Wurst (2) bestehen.

Im gezeigten Ausführungsbeispiel bestehen die Rollenstränge aus mehreren Einzelrollen aus einem hygienisch geeigneten Kunststoff, die untereinander durch Zapfenverbindungen gekoppelt sind. Die Stützrollen sind drehbar gelagert und werden durch einen gemeinsamen Antrieb (8) in Drehbewegung versetzt. Dies hat zur Folge, daß die Wurst (2) auf der Aufnahme (7) in der in Fig. 5 gezeigten Drehrichtung (21) um ihre Längsachse rotiert.

In der Schälstation (4) ist eine Abzugsvorrichtung (12) angeordnet, mit der der Darm als Hautstreifen (17) von der Wurst (2) entfernt wird. Die Abzugsvorrichtung (12) ist seitlich versetzt mit Abstand neben der Aufnahme (7) angeordnet. In der gezeigten Ausführungsform ist sie links oder rechts neben der Aufnahme (7) angeordnet, kann aber auch über oder unter der Aufnahme (7) positioniert sein.

Die Abzugsvorrichtung (12) besteht aus zwei parallelen Abzugswalzen (13,14), von denen mindestens eine durch einen geeigneten Antrieb (18), beispielsweise einen steuerbaren Gleichstrommotor mit Zahnriementrieb, angetrieben ist. Die beiden Abzugswalzen (13,14) bilden zwischen sich einen Förderspalt, der in der Größe einstellbar ist. Hierzu ist beispielsweise die äußere Abzugswalze (14) beweglich gelagert. Die beiden Abzugswalzen (13,14) befinden sich etwas oberhalb der benachbarten Stützrolle (7).

Oberhalb der Abzugswalzen (13,14) und seitlich zur Wurst (2) hin versetzt ist eine Umlenkrolle (15) angeordnet, die frei drehbar gelagert ist. Die Umlenkrolle (15) befindet sich mit ihrer Oberkante etwa in Höhe des Wurstscheitels (vgl. Fig. 5). Die Umlenkrolle (15) ist frei drehbar in einer eigenen zustellbaren Halterung an einem Gestell (19) gelagert, in dem auch die beiden Abzugswalzen (13,14) gelagert sind.

Die Abzugswalzen (13,14) und die Umlenkrolle (15) sind im wesentlichen parallel zur Aufnahme (7) bzw. der Wurst (2) ausgerichtet. Im gezeigten Ausführungsbeispiel sind sie gleich lang. Die Umlenkrolle (15) kann aber auch länger als die beiden Abzugswalzen (13,14) sein und beidseits überstehen. Zur Anpassung an unterschiedliche Arten und Größen des Lebensmittels (2) sowie unterschiedliche Ablösebedingungen für die Haut (17) können die Abzugswalzen (13,14) und/oder die Umlenkrolle (15) einzeln für sich am Gestell (19) seitenverstellbar, höhenverstellbar oder schwenkbar gelagert sein, um geeignete Anstellbedingungen gegenüber dem abzulösenden Hautstreifen (17) zu schaffen. Je nach Art des zu bearbeitenden Lebensmittels (2) kann auch das Gestell (19) gegenüber der Aufnahme (7) in geeigneter Weise verstellbar gelagert sein.

Oberhalb der beiden Abzugswalzen (13,14) ist an dem zur Auswurfstation (5) hin gelegenen Ende ein Abweiser (16) für den Hautstreifen (17) angeordnet. Vorzugsweise besteht dieser Abweiser (16) aus einer frei drehbaren Rolle, an der die Kante des Hautstreifens (17) anlaufen kann. Der Abweiser (16) verhindert ein Herausrutschen des Hautstreifens (17) aus der Abzugsvorrichtung (12). Der Abweiser (16) ist ebenfalls im Gestell (19) gelagert und in geeigneter Weise mit den Abzugswalzen (13,14) verstellbar.

Wie Fig. 3 bis 5 verdeutlichen, wird zum Abzug der Haut am stirnseitigen Ende der Wurst (2) ein kleiner vorzugsweise vertikaler Schnitt angebracht, so daß ein abstehender Wurstzipfel oder Hautstreifen (17) entsteht. Dieser wird über die Umlenkrolle (15) geführt und in den Förderspalt zwischen den beiden Abzugswalzen (13,14) gelegt. Zum öffnen der Walzenanordnung kann beispielsweise die äußere Abzugswalze (14) einen Schwenkmechanismus aufweisen. In Betriebsstellung wird der Hautstreifen (17) zwischen den beiden Abzugswalzen (13,14) im Klemmschluß geführt und bei Drehung der Abzugswalzen (13,14) in vertikaler Abzugsrichtung (22) nach unten in einen geeigneten Auffangbehälter oder dergleichen (nicht dargestellt) befördert.

Die Schälmaschine (1) besitzt ein Maschinengestell (6), an dem neben der drehbaren Aufnahme (7) und der Abzugsvorrichtung (12) auch ein Axialförderer (9) gelagert ist. Dieser ist beispielsweise als Schieber oder als elektromotorisch längs der Aufnahme (7) angetriebender Schlepphaken oder dergleichen ausgebildet. Der Axialförderer (9) transportiert die Wurst (2) beim Abwickelvorgang kontinuierlich in der axialen Vorschubrichtung (20) an der Abzugsvorrichtung (12) vorbei. Zugleich dreht sich die Wurst (2) in der vorerwähnten Weise auf der Aufnahme (7).

Wie Fig. 3 bis 5 verdeutlichen, löst sich der Hautstreifen (17) spiralförmig von der bewegten Wurst (2) und wandert im wesentlichen senkrecht und gerade durch die Abzugswalzen (13,14).

Die Umlenkrolle (15) kann außer der Führungsfunktion für den Hautstreifen (17) auch eine Gegenhalterfunktion für die Wurst (2) haben. Sie kann dazu am Wurstmantel anliegen oder mit einem relativ geringen Abstand dazu angeordnet sein. Die Umlenkrolle (15) kann auch pendelnd gelagert sein, um bei unterschiedlichen Ablösebedingungen analog einer Tänzerfunktion einen Zugausgleich am Hautstreifen (17) zu bewirken. Zur sicheren Führung der Wurst (2) können auch zusätzliche Niederhalter oder sonstige geeignete Führungselemente (nicht dargestellt) vorhanden sein.

Wie Fig. 5 verdeutlicht, löst sich der Hautstreifen (17) vorzugsweise mit einem spitzen Knick und im wesentlichen tangential vom Wurstumfang ab. Die Ablösestelle befindet sich in Drehrichtung (21) ein Stück vor der Umlenkrolle (15) und etwas hinter dem Wurstscheitel. Je nach Art der Haut (17) und des Lebensmittels (2) kann die Ablösestelle auch an anderer Stelle des Wurstumfangs liegen und etwas anders aussehen. Der Hautstreifen (17) löst sich durch die erfindungsgemäße Anordnung im wesentlichen glatt und ohne Rückstände vom Lebensmittel (2).

Zur Koordinierung der kinematischen Abzugsbedingungen ist eine gemeinsame Maschinensteuerung (nicht dargestellt) vorgesehen, über die der Antrieb (8) der Aufnahme (7) der Axialförderer (9) und der Antrieb (18) der Abzugsvorrichtung (12) gekoppelt sind. Hierdurch lassen sich in gegenseitiger Variation der Drehgeschwindigkeit der Wurst (2), der Abzugsgeschwindigkeit des Hautstreifens (17) und der Vorschubgeschwindigkeit der Wurst (2) die Ablösebedingungen verändern und beeinflußen. Die Maschinensteuerung ist zu diesem Zweck frei programmierbar und vorzugsweise mit einem geeigneten Mikroprozessor nebst Daten- und Programmspeicher sowie geeigneter Peripherie ausgestattet.

Beim Schälvorgang wird die Wurst (2) kontinuierlich an der Abzugsvorrichtung (12) vorbeibewegt und gelangt dann in die Auswurfstation (5). Hier kann die fertig geschälte Wurst (2) von Hand entnommen werden. Zur Automatisierung kann auch ein geeigneter Auswerfer (11), beispielsweise in Form von Stempeln unterhalb der Aufnahme (7) vorgesehen sein. Der Auswerfer (11) kippt die geschälte Wurst (2) von der Aufnahme (7) in eine seitlich angeordnete Auffangwanne (10), von wo die geschälte Wurst manuell oder automatisch zu den Weiterverarbeitungsstationen befördert wird. Alternativ kann die geschälte Wurst (2) mit einem geeigneten Förderer axial abgezogen und durch eine Wandschleuse zu einer Aufschnittmaschine oder dgl. in einem benachbarten Reinraum transportiert werden.

Im gezeigten Ausführungsbeispiel wird der vordere Wurstzipfel von Hand angeschnitten und in die Abzugsvorrichtung (12) eingelegt. Dies kann durch eine geeignete Schneid- und Greifvorrichtung auch automatisiert werden. Für die Beschickung der Schälmaschine (1) kann der Aufgabestation (3) eine geeignete Zuführvorrichtung vorgeschaltet sein. Auf diese Weise läßt sich die Schälmaschine (1) in eine automatische Bearbeitungsstraße integrieren.

Fig. 6 und 7 zeigen in Stirnansicht und Seitenansicht bzw. Draufsicht eine Abwandlung der vorbeschriebenen Schälmaschine (1). Zum sauberen und sicheren Ablösen des Hautstreifens (17) ist hier eine zusätzliche Trennvorrichtung (23) vorgesehen. Sie besteht aus einem Messer (25) oder einem ähnlichen Schneidinstrument, das in einem Gehäuse (26) aus Kunststoff oder einem anderen hygienisch geeigneten Material eingebettet ist. Das Gehäuse (26) kann von Hand geführt werden oder gemäß Fig. 7 an einem schematisch dargestellten Gestell (27) gelagert sein. Die Trennvorrichtung (23) ist an der Abzugsstelle der Haut angeordnet und befindet sich vorzugsweise im Scheitelbereich des Lebensmittels (2). Das Gestell (27) kann verstellbar ausgebildet sein, so daß die Trennvorrichtung (23) in ein oder mehreren Achsen beweglich und verstellbar gelagert ist.

Wie Fig. 6 verdeutlicht, ist das Messer (25) im Gehäuse (26) eingebettet. Es erstreckt sich entlang des Randes eines Schlitzes (28) im Gehäuse (26), der etwa senkrecht zur Längsachse des Lebensmittels (2) ausgerichtet ist. Er kann auch etwas schräg angestellt sein. Das Messer (25) hat eine nach oben gerichtete Schneide, über die der abzulösende Hautstreifen (17) geführt und geschnitten wird.

Der unterhalb des Messers (25) angeordnete Schenkel (29) des Gehäuses (26) setzt sich nach vorn in ein schräg nach unten abgebogenes oder abgewinkeltes Leitelement (24) fort. Das Leitelement (24) ist als Dorn oder Finger ausgebildet, der zwischen das Lebensmittel (2) und die abzulösende Haut (17) eingeführt wird. Das Leitelement (24) hebt die Haut (17) ab und leitet sie in den Schlitz (28) und zum Messer (25). Der untere Gehäuseschenkel (29) und das Leitelement (24) sind in ihrer Wölbung bzw. Winkelstellung an den Durchmesser des Lebensmittels (2) angepaßt. Der Schenkel (29) und das Leitelement (24) liegen am Lebensmittel (2) im wesentlichen tangential an und sind im Übergangsbereich etwas abgehoben.

Im Ausführungsbeispiel von Fig. 6 und 7 ist die Drehrichtung (21) des Lebensmittels (2) gleichläufig mit der Abzugsrichtung (22) des Hautstreifens (17). Der Hautstreifen (17) wird tangential vom Lebensmittel (2) abgehoben und über das Messer (25) gezogen. Anschließend kann er über eine Umlenkrolle (15) zur Abzugsvorrichtung (12) geleitet werden. Diese Anordnung kann dem eingangs beschriebenen Ausführungsbeispiel entsprechen.

Vorzugsweise ist auch im Ausführungsbeispiel der Fig. 6 und 7 das Lebensmittel rotatorisch angetrieben und wird zugleich axial in Vorschubrichtung (20) gefördert. Bei entsprechender Abstimmung der beiden Fördergeschwindigkeiten kann der Hautsteifen (17) in etwa senkrecht zur Längsachse des Lebensmittels (2) abgezogen werden, wobei die Trennvorrichtung (23) vorzugsweise in gleicher Richtung ausgerichtet ist. Ansonsten können Aufbau und Funktion der Schälmaschine (1) die gleichen wie im eingangs beschriebenen Ausführungsbeispiel sein.

### BEZUGSZEICHENLISTE

- 1: Schälmaschine
- 2: Wurst, Lebensmittel
- 3: Aufgabestation
- 4: Schälstation
- 5: Auswurfstation
- 6: Maschinengestell
- 7: Aufnahme, Stützrolle
- 8: Antrieb
- 9: Axialförderer
- 10: Auffangwanne
- 11: Auswerfer
- 12: Abzugsvorrichtung
- 13: Abzugswalze
- 14: Abzugswalze
- 15: Umlenkrolle
- 16: Abweiser
- 17: Haut, Hautstreifen
- 18: Antrieb
- 19: Gestell
- 20: Vorschubrichtung
- 21: Drehrichtung
- 22: Abzugsrichtung
- 23: Trennvorrichtung
- 24: Leitelement
- 25: Messer, Klinge
- 26: Gehäuse
- 27: Gestell
- 28: Schlitz
- 29: Schenkel

## Patentansprüche

1. Vorrichtung zum Enthäuten von stangenförmigen Lebensmitteln (2), insbesondere Würsten, wobei die Vorrichtung eine Schälstation (4) aufweist und das Lebensmittel (2) rotierend angetrieben und längs verschieblich gelagert ist und die Schälstation (4) eine Abzugsvorrichtung (12) aufweist, in die ein Hautstreifen (17) des Lebensmittels (2) einlegbar ist und eine Trennvorrichtung (23) mit einem Messer (25) vorgesehen ist, und das Messer (25) die Haut (17) des Lebensmittels (2) schneidet und die Schälstation (4) die zwischen einer Aufgabestation (3) und einer Auswurfstation (5) vorgesehen ist von dem Lebensmittel (2) einen Hautstreifen (17) ablöst, **dadurch gekennzeichnet, daß** die Aufgabestation (3) und die Auswurfstation (5) durch eine Auflage (7) verbunden sind, auf der das Lebensmittel (2) aufliegt und die Trennvorrichtung (23) am Umfang des Lebensmittels (2) angreift und einen schraubenförmigen Hautstreifen (17) abschneidet, und die Abzugsvorrichtung (12), die mit Abstand peripher an der Auflage (7) vorgesehen ist, den abgeschnittenen Hautstreifen (17) aufnimmt.

2. Vorrichtung nach Anspruch 1, **dadurch gekennzeichnet, daß** die Abzugsvorrichtung (12) zwei drehend angetriebene Abzugswalzen (13,14) aufweist, die zwischen sich den Hautstreifen (17) im Klemmschluß fördern.

3. Vorrichtung nach Anspruch 2, **dadurch gekennzeichnet, daß** die Abzugswalzen (13,14) parallel zueinander und mit verstellbarem Abstand angeordnet sind.

4. Vorrichtung nach einem oder mehreren der vorhergehenden Ansprüche, **dadurch gekennzeichnet, daß** oberhalb der Abzugswalzen (13,14) und seitlich zum Lebensmittel (2) hin versetzt eine Umlenkrolle (15) für den Hautstreifen (17) angeordnet ist.

5. Vorrichtung nach einem oder mehreren der vorhergehenden Ansprüche, **dadurch gekennzeichnet, daß** die Abzugswalzen (13,14) und die Umlenkrolle (15) im wesentlichen parallel zueinander und zur Auflage (7) angeordnet sind.

6. Vorrichtung nach einem oder mehreren der vorhergehenden Ansprüche, **dadurch gekennzeichnet, daß** die Abzugswalzen (13,14) und/oder die Umlenkrolle (15) gegenüber der Auflage (7) verstellbar gelagert sind.

7. Vorrichtung nach einem oder mehreren der vorhergehenden Ansprüche, **dadurch gekennzeichnet, daß** oberhalb der Abzugswalzen (13,14) ein Abweiser (16) angeordnet ist, der ein Herausrutschen des Hautstreifens (17) aus dem Förderspalt verhindert.

8. Vorrichtung nach einem oder mehreren der vorhergehenden Ansprüche, **dadurch gekennzeichnet, daß** an der Auflage (7) ein Axialförderer (9) für das Lebensmittel (2) angeordnet ist.

9. Vorrichtung nach einem oder mehreren der vorhergehenden Ansprüche, **dadurch gekennzeichnet, daß** die Auflage (7) einen Drehantrieb (8) für das Lebensmittel (2) aufweist.

10. Vorrichtung nach einem oder mehreren der vorhergehenden Ansprüche, **dadurch gekennzeichnet, daß** die Auflage (7) aus mindestens zwei drehbaren Rollensträngen besteht, die lösbar gelagert sind.

11. Vorrichtung nach einem oder mehreren der vorhergehenden Ansprüche, **dadurch gekennzeichnet, daß** die Auswurfstation (5) einen Auswerfer (11) und eine neben der Auflage (7) angeordnete Auffangwanne (10) aufweist.

12. Vorrichtung nach einem oder mehreren der vorhergehenden Ansprüche, **dadurch gekennzeichnet, daß** die Antriebe der Abzugsvorrichtung (12), des Axialförderers (9) und der Auflage (7) durch eine gemeinsame frei programmierbare Maschinensteuerung verbunden sind.

13. Vorrichtung nach einem oder mehreren der vorhergehenden Ansprüche, **dadurch gekennzeichnet, daß** die Abzugsvorrichtung (12) seitlich neben der Auflage (7) vorgesehen ist.

14. Vorrichtung nach einem oder mehreren der vorhergehenden Ansprüche, **dadurch gekennzeichnet, daß** die Trennvorrichtung (23) ein Leitelement (24) aufweist, das unter die Haut (17) greift und sie vom Lebensmittel (2) abhebt.

15. Vorrichtung nach einem oder mehreren der vorhergehenden Ansprüche, **dadurch gekennzeichnet, daß** das Leitelement (24) dornartig ausgebildet und in Anpassung an den Lebensmitteldurchmesser schräg gegen das Lebensmittel (2) abgewinkelt ist.

16. Vorrichtung nach einem oder mehreren der vorhergehenden Ansprüche, **dadurch gekennzeichnet, daß** das Messer (25) der Trennvorrichtung (23) die von dem Leitelement (24) ergriffene Lebensmittelhaut durchtrennt.

17. Vorrichtung nach einem oder mehreren der vorhergehenden Ansprüche, **dadurch gekennzeichnet, daß** die Trennvorrichtung (23) um mindestens eine Achse, insbesondere um eine Achse, die parallel zu den Rollensträngen ist, verstellbar an der Schälmaschine (1) angeordnet ist.

18. Vorrichtung nach einem oder mehreren der vorhergehenden Ansprüche, **dadurch gekennzeichnet, daß** die Abzugsvorrichtung (12) unter der Auflage (7) vorgesehen ist.

## Claims

1. A device for skinning cylindrically shaped food products (2), in particular sausages, the device having a skinning station (4) and the food product (2) being rotated and conveyed in a longitudinal direction, the skinning station (4) having a stripping device (12) into which a strip of skin (17) of the food product (2) can be inserted and a separating device (23) equipped with a knife (25) with the knife (25) cutting the skin (17) of the food product (2), and the skinning station (4) arranged between a feeding station (3) and an ejecting station (5) detaching a strip of skin (17) from the food product (2), **characterized in that** the feeding station (3) and the ejecting station (5) are connected by means of a support (7) on which the food product (2) rests and the separating device (23) applied to the circumference of the food product (2) cuts a screw-shaped strip of skin (17), and the skinning device (12) provided at a certain distance to the periphery of the support (7) receives the cut-off strip of skin (17).

2. A device according to claim 1, **characterized in that** the skinning device (12) has two rotatably driven stripping rolls (13,14) feeding between them the strip of skin (17) by clamping.

3. A device according to claim 2, **characterized in that** the stripping rolls (13,14) are positioned parallel to one another and at an adjustable distance.

4. A device according to one or more of the preceding claims, **characterized in that** located above the stripping rolls (13,14) and to the side of the food product (2) there is a guide roller (15) for the strip of skin (17).

5. A device according to one or more of the preceding claims, **characterized in that** the stripping rolls (13,14) and the guide roller (15) are positioned essentially parallel to one another and to the support (7).

6. A device according to one or more of the preceding claims, **characterized in that** the stripping rolls (13,14) and/or the guide roller (15) are positioned so as to be adjustable with respect to the support (7).

7. A device according to one or more of the preceding claims, **characterized in that** positioned above the stripping rolls (13, 14) there is a guard (16) preventing the strip of skin (17) from slipping out of the feeding gap.

8. A device according to one or more of the preceding claims, **characterized in that** an axial feeding device (9) for the food product (2) is arranged at the support (7).

9. A device according to one or more of the preceding claims, **characterized in that** the support (7) has a drive (8) for rotating the food product (2).

10. A device according to one or more of the preceding claims, **characterized in that** the support (7) comprises at least two rotatable roller trains mounted so as to be detachable.

11. A device according to one or more of the preceding claims, **characterized in that** the ejecting station (5) has an ejector (11) and a collecting trough (10) arranged next to the support (7).

12. A device according to one or more of the preceding claims, **characterized in that** the driving mechanisms of the stripping device (12), the axial feed device (9) and the support (7) are linked by means of a common, user-programmable machine control unit.

13. A device according to one or more of the preceding claims, **characterized in that** the stripping device (12) is provided to the side of the support (7).

14. A device according to one or more of the preceding claims, **characterized in that** the separating device (23) has a guiding element (24) reaching under the skin (17) and lifting said skin off the food product (2).

15. A device according to one or more of the preceding claims, **characterized in that** the guiding element (24) is designed in the form of a thorn and in accordance with the diameter of the food product is inclined at an angle to the food product (2).

16. A device according to one or more of the preceding claims, **characterized in that** the knife (25) of the separating device (23) severs the food skin taken up by the guiding element (24).

17. A device according to one or more of the preceding claims, **characterized in that** the separating device (23) is arranged on the skinning device (1) in such a way that it is adjustable along at least one axis, in particular along an axis parallel to the roller train.

18. A device according to one or more of the preceding claims, **characterized in that** the stripping device (12) is positioned under the support.

## Revendications

1. Appareil de dépouillement pour des produits alimentaires (2) sous forme de barre, en particulier pour des saucissons, l'appareil ayant une station de dépouillement (4), le produit alimentaire (2) étant commandé de manière rotative et ténu de manière à permettre un déplacement dans le sens de sa longueur, la station de dépouillement (4) possédant un mécanisme de tirage (12) dans lequel une bande de peau (17) du produit alimentaire (2) peut être placé et un mécanisme de séparation (23) avec un couteau (25),celui-ci coupant la peau (17) du produit alimentaire (2), la station de dépouillement (4) étant située entre une station d'introduction (3) et une station d'éjection (5), séparant une bande de peau (17) du produit alimentaire (2), caractérisé en ce que la station d'introduction (3) et la station d'éjection (5) sont liées par un appui (7) sur lequel repose le produit alimentaire (2), le mécanisme de séparation (23) agissant sur le périmètre du produit alimentaire (2) et séparant une bande de peau (17) hélicoïdale avec le mécanisme de tirage (12) étant fixé de manière périphérique et à distance par rapport à l'appui (7) et recevant la bande de peau (17) séparée.

2. Dispositif suivant la revendication 1 caractérisé en ce que le mécanisme de tirage (12) possède deux rouleaux de tirage (13,14) commandés de manière rotative, transportant entre eux la bande de peau (17) par moyen de serrage de contact.

3. Dispositif suivant la revendication 2 caractérisé en ce que les rouleaux de tirage (13,14) sont arrangés, un parallèle par rapport à l'autre, avec une distance réglable.

4. Dispositif suivant l'une ou plusieurs des revendications précédentes caractérisé en ce qu'un rouleau de détournement (15) pour la bande de peau (17) est situé rapproché du produit alimentaire (2) au-dessus des rouleaux de tirage (13,14).

5. Dispositif suivant l'une ou plusieurs des revendications précédentes caractérisé en ce que les rouleaux de tirage (13,14) et le rouleau de détournement (15) sont arrangés essentiellement de manière parallèle entre eux et par rapport à l'appui (7).

6. Dispositif suivant l'une ou plusieurs des revendications précédentes caractérisé en ce que les rouleaux de tirage (13,14) et/ou le rouleau de détournement (15) sont fixés de manière réglable par rapport à l'appui (7).

7. Dispositif suivant l'une ou plusieurs des revendications précédentes caractérisé en ce qu'une pièce de renvoi (16) est fixée au-dessus des rouleaux de tirage (13,14), empêchant la bande de peau (17) de sortir de la fente transporteuse.

8. Dispositif suivant l'une ou plusieurs des revendications précédentes caractérisé en ce qu'un mécanisme de transport axial (9) pour le produit alimentaire (2) est fixé à l'appui (7).

9. Dispositif suivant l'une ou plusieurs des revendications précédentes caractérisé en ce que l'appui (7) possède une commande rotative (8) pour le produit alimentaire (2).

10. Dispositif suivant l'une ou plusieurs des revendications précédentes caractérisé en ce que l'appui (7) consiste en au moins deux files de rouleaux rotatifs fixées de manière démontable.

11. Dispositif suivant l'une ou plusieurs des revendications précédentes caractérisé en ce que la station d'éjection (5) possède un éjecteur (11) et une cuve de réception (10) du coté de l'appui (7).

12. Dispositif suivant l'une ou plusieurs des revendications précédentes caractérisé en ce que les commandes du mécanisme de tirage (12), du mécanisme de transport axial (9) et de l'appui (7) sont liées par un contrôleur de machine librement programmable.

13. Dispositif suivant l'une ou plusieurs des revendications précédentes caractérisé en ce que le mécanisme de tirage (12) est situé à côté de l'appui (7).

14. Dispositif suivant l'une ou plusieurs des revendications précédentes caractérisé en ce que le mécanisme de séparation (23) possède un élément de guidage (24) allant sous la peau (17), la séparant du produit alimentaire (2).

15. Dispositif suivant l'une ou plusieurs des revendications précédentes caractérisé en ce que l'élément de guidage (24) sous forme d'épine est incliné contre le produit alimentaire (2) en étant adapté au diamètre du produit alimentaire (2).

16. Dispositif suivant l'une ou plusieurs des revendications précédentes caractérisé en ce que le couteau (25) du mécanisme de séparation (23) coupe la peau du produit alimentaire, la peau étant saisie par l'élément de guidage (24).

17. Dispositif suivant l'une ou plusieurs des revendications précédentes caractérisé en ce que le mécanisme de séparation (23) est fixé à la machine de dépouillement de manière réglable autour d'au moins un axe, de préférence autour d'un axe étant parallèle par rapport aux files de rouleaux.

18. Dispositif suivant l'une ou plusieurs des revendications précédentes caractérisé en ce que le mécanisme de tirage (12) se trouve au-dessous de l'appui (7).
